# EUROPEAN PATENT APPLICATION

(11) **EP 0 724 925 A2**
(43) Date of publication of application: **07.08.1996**
(21) Application number: 96300735.6
(22) Date of filing: 02.02.1996
(51) Int. Cl.: B23H 1/02

(54) **Power supply apparatus for an electric discharge machine**

(30) Priority: 03.02.1995 JP 37785/95
(71) Applicant: FANUC LTD., Minamitsuru-gun, Yamanashi 401-05 (JP)
(72) Inventor: Sakano, Tetsuro, S-7, Fanuc Haitsufuji, Minamitsuru-gun, Yamanashi, 401-405 (JP); Oda, Takayuki, Fanuc Dai3virakaramatsu, Minamitsuru-gun, Yamanashi, 401-405 (JP); Okouchi, Yuichi, Room 14-104 Fanuc Manshonharimomi, Minamitsuru-gun, Yamanashi, 401-405 (JP)
(74) Representative: Billington, Lawrence Emlyn

(57) **Abstract**

A power supply apparatus for electric discharge machining in which the calorific value of the discharge current limiting resistor is small and a high-capacity power source is not required. The power supply apparatus comprises a combined power source (1) having at least two DC power sources (11, 12) and a discharge current limiting resistor (R2) connected to the combined power source (1) in series to form a series circuit to be connected to the discharge electrode (2) and the workpiece (3). The combined power supply (1) comprises a high-voltage DC power source (11) for applying a DC voltage for generating an electric discharge between the machining electrode (2) and the workpiece (3) and a low-voltage DC power source (12) for supplying a discharge current between the machining electrode (2) and the workpiece (3).

## Description

The present invention relates to a power supply apparatus for an electric discharge machine, for example to a power supply apparatus for use in a diesinking electric discharge machine.

In a diesinking electric discharge machine, a high DC voltage is applied between a conductive workpiece and a machining electrode to generate an electric discharge in a discharge gap to perform electric discharge machining. Generally, in order to generate a continuously stable electric discharge, it is necessary to apply a DC voltage of about 100V to 300V to the discharge gap while electric discharge is not generated in the discharge gap. A discharge current flowing in the discharge gap during the electric discharge has to be set to a predetermined value. In a previously-considered system, for setting the discharge current to a predetermined value, a resistor is inserted between a DC power source and electrodes in series. The discharge current flowing in the discharge gap is restricted to a desired value by the resistor connected in series.

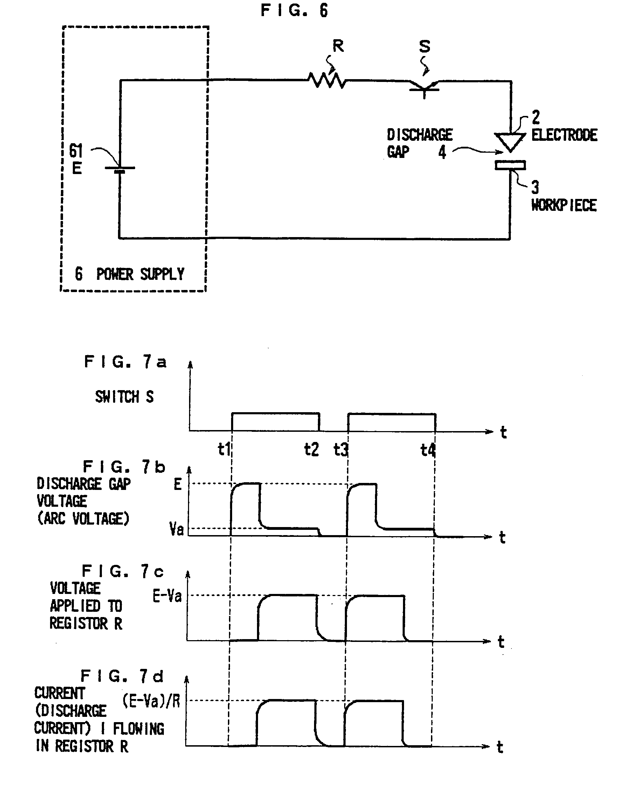

FIG. 6 of the accompanying drawings is a circuit diagram showing an example of a power supply apparatus used in a previously-considered electric discharge machine. In FIG. 6, a discharge gap 4 is formed between a workpiece 3 and a machining electrode 2. The power supply 6 applies a DC voltage between the workpiece 3 and the machining electrode 2 and supplies a discharge current between them. The power supply 6 has a DC power source 61 of voltage E. One terminal of the DC power source 61 is connected to the machining electrode 2 via a discharge current limiting resistor R and a switching element S, which are connected in series, and the other terminal is connected to the workpiece 3.

FIGS. 7a-7d are time charts showing the voltage and current in the respective elements of the previously-considered power supply apparatus. As shown in FIG. 7a, when the switching element S is closed, a high voltage E of about 100V to 300V is applied to the discharge gap from the DC power source 61. At this time, no current flows either in the discharge gap or in the discharge current limiting resistor R. When an electric discharge begins in the discharge gap after the voltage E is applied to the discharge gap, the discharge gap voltage is reduced to an arc voltage Va of about 20V to 30V and a discharge current starts flowing. During the electric discharge, the voltage applied to the discharge current limiting resistor R is (E-Va), and the current I flowing in the discharge current limiting resistor R is (E-Va)/R, as shown in FIGS. 7c and 7d. The calorific value Q which the discharge current limiting resistor R produces per unit time is (E-Va)²/R.

With respect to the above calorific value Q, there is a problem that the value Q is made quite large because the voltage E of the DC power source 61 is high and the discharge gap voltage Va during discharging is low in the previously-considered power supply apparatus.

With respect to the power supply 6,the previously-considered power source 61 is required to have such a high-voltage as to apply the high-voltage to the discharge gap to start the discharge and also have a capability of stably supplying a large discharge current in the discharge gap after starting the discharge. This means that the previously-considered power supply apparatus requires a high-capacity power source which is generally expensive to rise the cost of the power supply apparatus.

It is therefore desirable to provide a power supply apparatus for electric discharge machining in which the calorific value of a discharge current limiting resistor is small and a high-capacity power source is not required.

An embodiment of the present invention provides a power supply apparatus for electric discharge machining for supplying a pulsed voltage between a workpiece and a discharge electrode to generate an intermittent discharge in a discharge gap formed between the workpiece and the discharge electrode, characterised in that the power supply apparatus comprises a combined power source having at least two DC power sources and a discharge current limiting resistor connected to the combined power source in series to form a series circuit to be connected between the discharge electrode and the workpiece.

The combined power source has two functions of applying a DC voltage for generating an electric discharge in the discharge gap and supplying a DC current as a discharge current flowing in the discharge gap. According to one development of the present invention, the combined power source comprises a first series circuit composed of a high-voltage DC power source and a resistor, and a second series circuit connected to the first series circuit in parallel and composed of a low-voltage DC power source and a diode. In particular, a cathode of the high-voltage DC power source may be connected to a cathode of the low-voltage DC power source, an anode of the high-voltage DC power source may be connected to a cathode of the diode through the resistor, and an anode of the low-voltage DC power source may be connected to an anode of the diode. The high-voltage DC power source applies a DC voltage for generating an electric discharge in the discharge gap and the low-voltage DC power source supplies a discharge current to the discharge gap.

In an enbodiment of another development of the present invention, the combined power source comprises a series circuit composed of a high-voltage DC power source and a resistor, and a diode connected in parallel to the series circuit to form a parallel circuit, and a low-voltage DC power source connected to the parallel circuit in series.

In the above arrangement, the resistor connected to the high-voltage DC power source in series restricts a current flowing from the high-voltage DC power source and has a resistance value larger than that of the discharge current limiting resistor so that almost all of the discharge current is supplied from the low-voltage DC power source. The diode is provided for preventing the reverse current flow into the low-voltage DC power source.

The voltage of the high-voltage DC power source is not lower than a discharge generating voltage such that an electric discharge is generated in the discharge gap, and the voltage of the low-voltage DC power source is required to be at least a value for maintaining the electric discharge.

In operation, immediately after the switching element closes a discharge circuit including the power supply apparatus connected to the electrodes, a high voltage of the high-voltage DC power source of the combined power supply is applied to the discharge gap without generating an electric discharge in the discharge gap. After the high voltage is applied to the discharge gap, an arc discharge is generated in the discharge gap to flow a discharge current and the discharge gap voltage decreases to the arc voltage. As the high-voltage current limiting resistor connected to the high-voltage DC power source has a resistance value larger than that of the discharge current limiting resistor, the discharge current after starting the discharge is supplied chiefly from the low-voltage DC power source. As the voltage value of the low-voltage DC power source is lower than that of a DC power source used in the conventional power supply apparatus, a voltage applied to the discharge current limiting resistor during discharge is smaller than that in the conventional art. Accordingly, the calorific value of the discharge current limiting resistor per unit time is reduced as compared with the conventional power supply apparatus.

Further, the DC power source used in the power supply apparatus embodying the present invention comprises a high-voltage DC power source which is required to supply only a small current at high voltage, and a low-voltage DC power source which supplies almost all of the discharge current at low voltage. Both the high-voltage DC power source and the low-voltage DC power source is a low-capacity type and hence the power supply apparatus embodying the present invention requires no high-capacity DC power source which is necessary in the previously-considered power supply apparatus.

Reference will now be made, by way of example, to the accompanying drawings, in which:
FIG. 1 is a circuit diagram of a power supply circuit for electric discharge machining according to a first embodiment of the present invention;
FIGS. 2a-2f are time charts showing transition of the voltage and current in the respective elements of the power supply circuit shown in FIG. 1;
FIGS. 3a and 3b are graphs showing the effects of the low-electrode-wearing machining performed by the power supply circuit shown in FIG. 1;
FIG. 4 is a circuit diagram of a power supply circuit for electric discharge machining according to a second embodiment;
FIGS. 5a-5f are time charts showing transition of the voltage and current in the respective elements of the power supply circuit shown in FIG. 4;
FIG. 6 is a circuit diagram of a conventional power supply circuit for electric discharge machining; and
FIGS. 7a-7d are time charts showing transition of the voltage and current in the respective elements of the conventional power supply circuit.

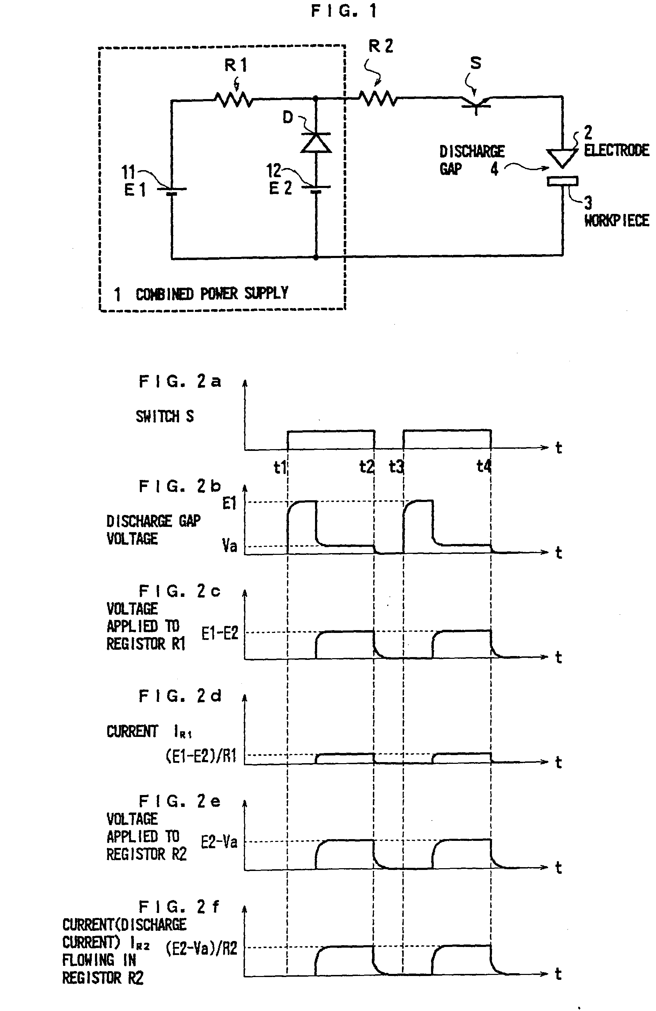

A power supply apparatus according to a first embodiment of the present invention will be described referring to FIG. 1.

FIG. 1 schematically shows a relationship between a combined power supply 1, a machining electrode 2 and a workpiece 3. In FIG. 1, a discharge gap 4 is formed between the machining electrode 2 and the workpiece 3. The combined power supply 1 applies a DC voltage between the machining electrode 2 and the workpiece 3 and supplies a discharge current between them. The combined power supply 1 includes a high-voltage DC power source 11 of a voltage E1 and a low-voltage DC power source 12 of a voltage E2. The voltage E1 of the high-voltage DC power source 11 is high enough to generate an electric discharge in the discharge gap 4. The voltage E2 of the low-voltage DC power source 12 is such a low voltage as to maintain an arc voltage in the discharge gap 4 and has an adequate capacity for flowing a discharge current.

The combined power supply 1 comprises a first series circuit composed of the high-voltage DC power source 11 and a high-voltage current limiting resistor R1, and a second series circuit composed of the low-voltage DC power source 12 and a diode D, these series circuits being connected to each other in parallel. More specifically, in the power supply 1, a cathode of the high-voltage DC power source 11 is connected to a cathode of the low-voltage current power source 12, an anode of the high-voltage DC power source 11 is connected to a cathode of the diode D through the high-voltage current limiting resistor R1, and an anode of the low-voltage DC power source 12 is connected to an anode of the diode D.

One terminal (the joint of the high-voltage current limiting resistor R1 and the cathode of the diode in FIG. 1) of the combined power supply 1 is connected to the machining electrode 2 via a discharge current limiting resistor R2 and a switching element S, and the other terminal (the joint of the cathode of the high-voltage DC power source 11 and the cathode of the low-voltage DC power source 12 in FIG. 1) is connected to the workpiece 3. Thus, a power supply circuit is formed for generating an electric discharge in the discharge gap 4 of the electric discharge machine. The high-voltage current limiting resistor R1 has a resistance value adequately larger than that of the discharge current limiting resistor R2.

The switching element S receives a control signal from a non-illustrated controller and operates to open and close the power supply circuit, so that a pulsed voltage is applied to the discharge gap 4. As the switching element S and the control of the switching element S by the controller are well known in the art, the detailed description is omitted here.

The operation of the power supply of the first embodiment will be described using time charts of FIGS. 2a-2f.

FIG. 2a shows opening and closing statuses of the switching element S. FIG. 2b shows a voltage applied to the discharge gap. FIG. 2b shows how a voltage applied to the high-voltage current limiting resistor R1. FIG. 2d shows a current flowing in the high-voltage current limiting resistor R1. FIG. 2e shows a voltage applied to the discharge current limiting resistor R2. FIG. 2f shows a current flowing in the discharge current limiting resistor R2.

As shown in FIG. 2a, the switching element S closes at time t1 (and time t3) and opens at time t2 (and time t4) repeatedly, to apply a pulsed voltage to the discharge gap 4. When the switching element S closes at time t1 (and time t3), the high-voltage DC power source 11 of the combined power supply 1 applies a DC voltage to the discharge gap 4. At that time, as a DC voltage E1 of the high-voltage DC power source 11 is higher than a DC voltage E2 of the low-voltage DC power source 12, the DC voltage E1 of the high-voltage DC power source 11 is applied to the discharge gap 4. Further, as the diode D is inserted with its anode connected to the anode of the low-voltage DC power source 12 and with its cathode connected to the anode of the high-voltage DC power source 11, no current flows into the low-voltage DC power source 12 from the high-voltage DC power source 11.

Until the discharge current starts flowing in the discharge gap 4, no current is supplied from the combined power supply 1 and therefore no current flows in either the high-voltage current limiting resistor R1 or the discharge current limiting resistor R2.

When an electric discharge is generated in the discharge gap 4, the voltage between the workpiece and machining electrode lowers to an arc voltage Va (a low voltage of about 20 V to 30 V). During this discharging, a discharge current flows from the high-voltage power source 11 and the low-voltage DC power source 12. However, since the resistance value of the high-voltage current limiting resistor R1 is adequately larger than that of the discharge current limiting resistor R2, the current from the high-voltage DC power source 11 is restricted so that almost all of the discharge current is the current from the low-voltage DC power source 12.

A current I_{R1} flowing in the high-voltage current limiting resistor Rl is represented by (E1-E2)/R1, while a current I_{R2} flowing in the low-voltage current limiting resistor R2 is represented by (E2-Va)/R2. If it is set R1>>R2, the current I_{R1} is adequately small as compared with the current I_{R2}. Consequently, the starting of the electric discharge in the discharge gap 4 is performed by the high-voltage DC power source 11 which supplies a small current but applies a high voltage, and once the electric discharge has been generated in the discharge gap 4, the discharge current is supplied from the low-voltage DC power source 12 which applies a relatively low voltage but has a large capacity enough to supply the discharge current.

With respect to calorific value Q which the discharge current limiting resistor R2 produces per unit time, this calorific value is expressed by (E2-Va)²/R2 using the current I_{R2} (= (E2-Va)/R2) flowing in the discharge current limiting resistor R2 and the voltage (E2-Va) applied to the discharge current limiting resistor R2. Compared with the calorific value Q (=(E-Va)²/R) produced by the discharge current limiting resistor R in the conventional electric discharge machine, the above calorific value in the electric discharge machine of this invention is reduced, as the voltage E2 of the low-voltage DC power source is smaller than the voltage E of the conventional DC power source.

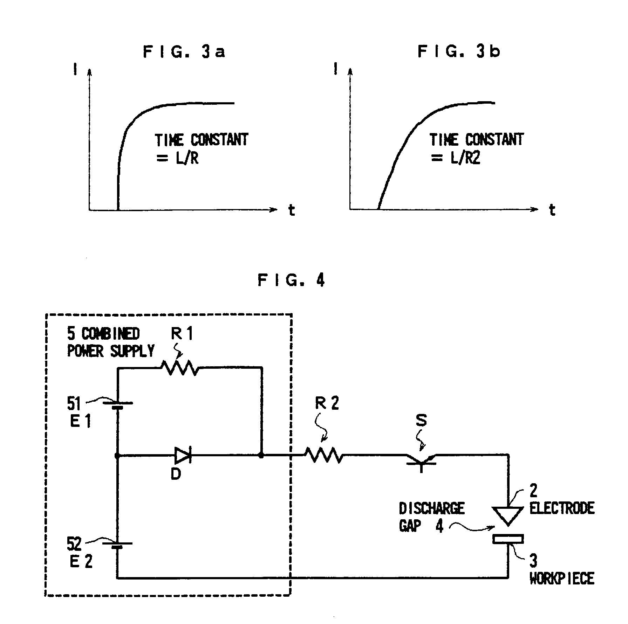

Further, another effect of the power supply of this embodiment will be described. FIGS. 3a and 3b illustrate effects of low-electrode-wearing machining according to the present embodiment. Generally, it is known that there is a close connection between the rise of the discharge current and the wear rate of electrodes and the gentler the rising of a discharge current, the smaller the wear rate of electrodes. FIG. 3a and FIG. 3b show the rising state of the discharge currents having the same peak value in the previous electric discharge machine and in the electric discharge machine embodying the present invention, respectively.

The time constant of the rising of the discharge current in the conventional electric discharge machine is represented by L/R as shown in FIG. 3a and the time constant of the rising of the discharge current in the electric discharge machine of the present embodiment is represented by L/R2 as shown in FIG. 3b, wherein R represents the resistance value of the discharge current limiting resistor of the conventional electric discharge machine, R2 (R2<R) represents the resistance value of the discharge current limiting resistor of the electric discharge machine of the present embodiment and the electric discharge machine has the same floating inductance L. As R2 and R have the relationship R2<R, the rising of the discharge current in the electric discharge machine of the present embodiment is gentle as compared with that in the previous electric discharge machine. Thus, in the electric discharge machine with the combined power source according to the present embodiment, the wear rate of electrodes is reduced to enable the low-electrode-wearing machining.

Hereinafter described is a power supply apparatus for an electric discharge machine according to a second embodiment of the present invention referring to Fig. 4. In FIG. 4, the discharge gap 4 is formed between the machining electrode 2 and the workpiece 3. A combined power supply 5 applies a DC voltage between the machining electrode 2 and the workpiece 3 and supplies a discharge current between them. The combined power supply 5 comprises a high-voltage DC power source 51 of a voltage E1 and a low-voltage DC power source 52 of a voltage E2. The voltage E1 of the high-voltage DC power source 51 is high enough to generate an electric discharge in the discharge gap 4. The low-voltage DC power source 52 has such a low value E2 as to maintain an arc voltage in the discharge gap 4 and has an adequate capacity for flowing a discharge current.

The combined power supply 5 comprises a series circuit composed of a high-voltage DC power source 51 and a high-voltage current limiting resistor R1, a diode D connected to the series circuit in parallel to form a parallel circuit, and a low-voltage DC power source 52 connected the parallel circuit in series. More specifically, in the combined power supply 5, a cathode of the high-voltage DC power source 51 and an anode of the low-voltage DC power source 52 are connected to an anode of the diode D, and an anode of the high-voltage DC power source 51 is connected to a cathode of the diode D through the high-voltage current limiting resistor R1.

One terminal (a junction of the high-voltage current limiting resistor R1 and the cathode of the diode D in FIG. 4) of the combined power supply 5 is connected to the machining electrode 2 through a discharge current limiting resistor R2 and a switching element S, and the other terminal (a cathode of the low-voltage DC power source 52 in FIG. 4) is connected to the workpiece 3. Thus, a power supply circuit is formed for generating an electric discharge in the discharge gap 4 of the electric discharge machine. A resistance value of the high-voltage current limiting resistor R1 is set adequately larger than that of the discharge current limiting resistor R2.

The switching element S receives a control signal from a non-illustrated controller and operates to open and close the power supply circuit, so that a pulsed voltage is applied to the discharge gap 4.

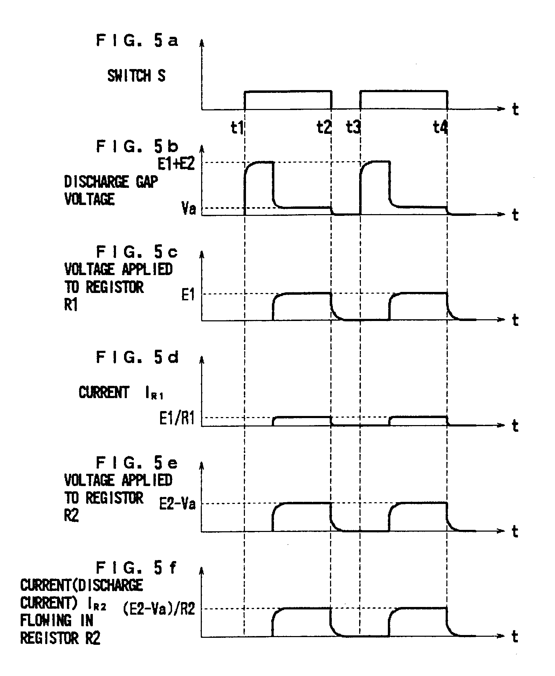

The operation of the power supply of the second embodiment will be described using time charts of FIGS. 5a-5f. FIGS. 5a-5f show time charts similar to those shown in FIGS. 2a-2f, respectively.

As shown in FIG. 5a, the switching element S closes at time tl (and time t3) and opens at time t2 (and time t4) repeatedly, to apply a pulsed voltage to the discharge gap 4, likewise in the first embodiment. When the switching element S closes at time t1 (and time t3), the high-voltage DC power source 51 and the low-voltage DC power source 52 of the combined power supply 5 applies a DC voltage to the discharge gap 4. At that time, since the high-voltage power source 51 and low-voltage DC power source 52 are connected in series, the sum (E1+E2) of the voltages E1 and E2 of the two DC power sources 51 and 52 are applied to the discharge gap 4. Further, as the diode D is inserted with its anode connected to the cathode of the high-voltage DC power source 51 and with its cathode connected to the junction of the high-voltage current limiting resistor R1 and the discharge current limiting resistor R2, no current flows into the low-voltage DC power source 52 from the high-voltage DC power source 51.

Until the discharge current starts flowing in the discharge gap 4, no current is supplied from the combined power supply 5 and therefore no current flows in either the high-voltage current limiting resistor R1 or the discharge current limiting resistor R2.

When an electric discharge is generated in the discharge gap 4, the voltage between the workpiece and the machining electrode lowers to an arc voltage Va (a low voltage of about 20 V to 30 V). During the discharge, a discharge current flows from the high-voltage power source 51 and the low-voltage DC power source 52. However, as the resistance value of the high-voltage current limiting resistor R1 is adequately larger than that of the discharge current limiting resistor R2, the current from the high-voltage DC power source 51 is restricted so that almost all of the discharge current is the current from the low-voltage DC power source 52.

A current I_{R1} flowing in the high-voltage current limiting resistor R1 is represented by E1/R1, while a current I_{R2} flowing in the low-voltage current limiting resistor R2 is represented by (E2-Va)/R2. If it is set R1>>R2, the current I_{R1} is adequately small as compared with the current I_{R2}. Consequently, the starting of the electric discharge in the discharge gap 4 is performed by the high-voltage DC power source 51 which supplies a small current but applies a high voltage, and once the electric discharge has been generated in the discharge gap 4, the discharge current is supplied from the low-voltage DC power source 52 which applies a relatively low voltage but has a large capacity enough to supply the discharge current.

With respect to calorific value Q which the discharge current limiting resistor R2 produces per unit time, this calorific value is expressed by (E2-Va)²/R2 using the current I_{R2} (= (E2-Va)/R2) flowing in the discharge current limiting resistor R2 and the voltage (E2-Va) applied to the discharge current limiting resistor R2, likewise in the first embodiment. Accordingly, the calorific value Q produced by the discharge current limiting resistor R2 per unit time is reduced as compared with that produced by the discharge current limiting resistor R in the previously-considered power supplying apparatus. In this embodiment, like the first embodiment, the consumption rate of electrodes is reduced to perform the low-electrode-consuming machining.

As is apparent from the foregoing description, embodiments of the present invention provide a power supply apparatus for an electric discharge machine in which the calorific value of the discharge current limiting resistor is small and a high-voltage and high-capacity power source is not required.

## Claims

1. A power supply apparatus for electric discharge machining for applying a pulsed voltage between a workpiece (3) and a discharge electrode (2) to generate an intermittent discharge in a discharge gap (4) formed between said workpiece (3) and said discharge electrode (2), characterised in
that said power supply apparatus comprises a combined power supply (1; 5) having at least two DC power sources (11, 12; 51, 52) and a discharge current limiting resistor (R2) connected to said combined power supply (1; 5) in series to form a series circuit to be connected between said discharge electrode (2) and said workpiece (3).

2. A power supply apparatus according to claim 1, characterised in that said combined power supply (1) comprises a first series circuit composed of a high-voltage DC power source (11) and a resistor (R1), and a second series circuit connected to said first series circuit in parallel and composed of a low-voltage DC power source (12) and a diode (D).

3. A power supply apparatus according to claim 2, characterised in that a cathode of said high-voltage DC power source (11) is connected to a cathode of said low-voltage DC power source (12), an anode of said high-voltage DC power source (11) is connected to a cathode of said diode (D) through said resistor (R1), and an anode of said low-voltage DC power source (12) is connected to an anode of said diode (D).

4. A power supply apparatus according to claim 1, characterised in that said combined power supply (5) comprises a series circuit composed of a high-voltage DC power source (51) and a resistor (R1), and a diode (D) connected in parallel to said series circuit to form a parallel circuit, and a low-voltage DC power source (52) connected to said parallel circuit in series.

5. A power supply apparatus according to claim 4, characterised in that a cathode of said high-voltage DC power source (51) and an anode of said low-voltage DC power source (52) are connected to an anode of said diode (D), and an anode of said high-voltage DC power source (51) is connected to a cathode of said diode (D) through said resistor (R1).

6. A power supply apparatus according to any of claims 2, 3, 4 and 5, characterised in that said high-voltage DC power source (11; 51) applies a voltage not lower than a discharge generating voltage such that the discharge is generated at the discharge gap (4) between the workpiece (3) and the discharge electrode (2).

7. A power supply apparatus according to any of claims 2, 3, 4 and 5, characterised in that said low-voltage DC power source (12, 52) supplies a current not lower than a discharge current to the discharge gap (4) between the workpiece (3) and the discharge electrode (2).

8. A power supply apparatus according to any of claims 2, 3, 4, 5, 6 and 7, characterised in that a resistance value of said resistor (R1) is larger than the resistance value of said discharge current limiting resistor (R2).
